# FASCICULE DE BREVET EUROPEEN

(11) **EP 3 494 417 B1**
(45) Date de publication et mention de la délivrance du brevet: **24.02.2021**
(21) Numéro de dépôt: 17754428.5
(22) Date de dépôt: 03.08.2017
(51) Int. Cl.: G02B 1/04

(54) **POLYESTER THERMOPLASTIQUE AMORPHE POUR LA FABRICATION D'ARTICLES OPTIQUES**
AMORPHER THERMOPLASTISCHER POLYESTER ZUR HERSTELLUNG VON OPTISCHEN ARTIKELN
AMORPHOUS THERMOPLASTIC POLYESTER FOR THE PRODUCTION OF OPTICAL ARTICLES

(30) Priorité: 05.08.2016 FR 1657614
(43) Date de publication de la demande: 12.06.2019
(73) Titulaire: Roquette Frères, 62136 Lestrem (FR)
(72) Inventeur: AMEDRO, Hélène, 62400 Bethune (FR); SAINT-LOUP, René, 59160 Lomme (FR)
(74) Mandataire: Plasseraud IP
(86) Numéro de dépôt international: PCT/FR2017/052182
(87) Numéro de publication internationale: WO 2018/024996

(56) Documents cités:
- EP-A1- 1 560 869
- WO-A1-2016/189239
- US-A1- 2012 177 854
- J. M. KOO ET AL: "Structural and thermal properties of poly(1,4-cyclohexane dimethylene terephthalate) containing isosorbide", POLYMER CHEMISTRY, vol. 6, no. 39, 25 août 2015 (2015-08-25), pages 6973-6986, XP055344990, GB ISSN: 1759-9954, DOI: 10.1039/C5PY01152C

## Description

### Domaine de l'invention

La présente invention se rapporte à l'utilisation d'un polyester thermoplastique amorphe comprenant au moins un motif 1,4 : 3,6-dianhydrohexitol, qui peut présenter d'excellentes propriétés de résistance au choc, pour la fabrication d'articles optiques.

### Arrière-plan technologique de l'invention

Du fait de leurs nombreux avantages, les matières plastiques sont devenues incontournables pour la fabrication en série d'objets. En effet, leur caractère thermoplastique permet à ces matières d'être transformées à cadence élevée en toutes sortes d'objets.

Certains polyesters aromatiques thermoplastiques ont des propriétés thermiques leur permettant d'être utilisés directement pour la fabrication de matériaux. Ils comprennent des motifs diol aliphatique et diacide aromatique. Parmi ces polyesters aromatiques, on peut citer le polyéthylène téréphtalate (PET), qui est un polyester comprenant des motifs éthylène glycol et acide téréphtalique, servant par exemple à la fabrication de films.

Toutefois, pour certaines applications ou dans certaines conditions d'utilisation, ces polyesters ne présentent pas toutes les propriétés requises, notamment les propriétés optiques, de résistance au choc ou encore de tenue thermique. C'est ainsi que des PET modifiés glycol (PETg) ont été développés. Ce sont généralement des polyesters comprenant, en plus des motifs éthylène glycol et acide téréphtalique, des motifs cyclohexanediméthanol (CHDM). L'introduction de ce diol dans le PET lui permet d'adapter les propriétés à l'application visée, par exemple d'améliorer sa résistance au choc ou ses propriétés optiques, notamment lorsque le PETg est amorphe.

D'autres PET modifiés ont également été développés en introduisant dans le polyester des motifs 1,4 : 3,6-dianhydrohexitol, notamment de l'isosorbide (PEIT). Ces polyesters modifiés présentent des températures de transition vitreuse plus élevées que les PET non modifiés ou les PETg comprenant du CHDM. En outre, les 1,4 : 3,6-dianhydrohexitols présentent l'avantage de pouvoir être obtenus à partir de ressources renouvelables telles que l'amidon.

Un problème de ces PEIT est qu'ils peuvent présenter des propriétés insuffisantes de résistance au choc. De plus, la température de transition vitreuse peut être insuffisante pour certaines applications où les pièces sont soumises à des températures d'usage un élevées.

Pour améliorer les propriétés de résistance au choc des polyesters, il est connu de l'art antérieur d'utiliser des polyesters dont on a réduit la cristallinité. En ce qui concerne les polyesters à base d'isosorbide, on peut citer la demande US 2012/0177854 qui décrit des polyesters comprenant des motifs acide téréphtalique et des motifs diols comprenant de 1 à 60% en moles d'isosorbide et de 5 à 99% de 1,4-cyclohexanediméthanol qui présentent des propriétés de résistance à l'impact améliorées.
Comme indiqué dans la partie introductive de cette demande, il s'agit d'obtenir des polymères dont on élimine la cristallinité par l'ajout de comonomères, et donc ici par l'ajout de 1,4-cyclohexanediméthanol. Dans la partie exemples est décrite la fabrication de différents poly(ethylène-co-1,4-cyclohexanediméthylène-co-isosorbide) téréphtalates (PECIT) ainsi qu'également un exemple de poly(1,4-cyclohexanediméthylène-co-isosorbide) téréphtalate (PCIT).

On peut également noter que, tandis que les polymères de type PECIT ont fait l'objet de développements commerciaux, ce n'est pas le cas des PCIT. En effet leur fabrication était jusqu'ici considérée comme complexe, l'isosorbide présentant une faible réactivité comme diol secondaire. Yoon et al. (Synthesis and Characteristics of a Biobased High-Tg Terpolyester of Isosorbide, Ethylene Glycol, and 1,4-Cyclohexane Dimethanol: Effect of Ethylene Glycol as a Chain Linker on Polymerization, Macromolecules, 2013, 46, 7219-7231*)* ont ainsi montré que la synthèse de PCIT est bien plus difficile à réaliser que celle de PECIT. Ce document décrit l'étude de l'influence du taux d'éthylène glycol sur la cinétique de fabrication de PECIT.

Dans *Yoon et al.,* un PCIT amorphe (qui comprend par rapport à la somme des diols environ 29% d'isosorbide et 71% de CHDM), est fabriqué afin de comparer sa synthèse et ses propriétés avec celles des polymères de type PECIT. L'utilisation de températures élevées lors de la synthèse induit une dégradation thermique du polymère formé si on se réfère au premier paragraphe de la partie *Synthesis* de la page 7222, cette dégradation étant notamment liée à la présence des diols aliphatiques cycliques tels que l'isosorbide. De ce fait, *Yoon et al.* ont utilisé un procédé dans lequel la température de polycondensation est limitée à 270°C. Yoon et al. ont constaté que, même en augmentant le temps de polymérisation, le procédé ne permet pas non plus d'obtenir un polyester présentant une viscosité suffisante. Ainsi, sans ajout d'éthylène glycol, la viscosité du polyester reste limitée, ceci malgré l'utilisation de temps de synthèse prolongés.

Dans le domaine de la fabrication d'articles optiques, les polymères utilisés doivent présenter des propriétés optiques mais aussi des de résistances aux chocs et aux rayures ainsi qu'une faible biréfringence. Or, ces propriétés ne sont pas optimales avec les polymères présents sur le marché et il existe encore à ce jour le besoin de trouver de nouveaux polyesters thermoplastiques présentant les propriétés mécaniques adaptées ainsi qu'une viscosité réduite en solution suffisamment élevée pour être utilisés dans la fabrication d'articles optiques et assurer de bonnes propriétés d'usage de ceux-ci.

On connait du document US 6,126,992 des articles optiques fabriqués à partir de polymères ayant des motifs acide téréphtalique, des motifs éthylène glycol et des motifs isosorbide et éventuellement un autre diol (par exemple le 1,4-cyclohexanediméthanol). L'ensemble des polymères obtenus présentent ainsi des motifs éthylène glycol car il est largement admis que ces derniers sont nécessaires à l'obtention d'une température de transition vitreuse élevée. De plus, les exemples de préparation mis en œuvre ne permettent pas d'obtenir des polymères présentant des températures de transition vitreuse élevées, au contraire, elles sont même trop basses (106°C pour le polymère de l'exemple 1 et 116°C pour le polymère de l'exemple 2) pour donner entière satisfaction dans la fabrication d'articles optiques.

US 2012177854 A1 divulgue dans (l'exemple 5) un polyester thermoplastique amorphe comprenant: 20 % mol isosorbide (ISB) 27,5 % mol 1,4 cyclohexanedimethanol (CHDM) 2,5 % mol ethylene glycol (EG) 50 % mol acide téréphthalique (TPA) et dont la viscosité réduite en solution (35 °C ; o-chlorophénol; 1,2 g/L de polyester) est de 55 mL/g. Le polyester n'est pas exempt de motifs diol aliphatique non cyclique. Les polyesters de US 2012177854 A1 sont utilisés pour fabriquer des articles optiques. Ainsi, il existe encore à ce jour le besoin de trouver de nouveaux polyesters thermoplastiques contenant des motifs 1,4 : 3,6-dianhydrohexitol pour la fabrication d'articles optiques, lesdits polyesters ayant donc des propriétés optiques améliorées, pouvant être facilement mis en forme et présentant une résistance thermique ainsi qu'une résistance aux chocs élevées.

Il est du mérite de la Demanderesse d'avoir trouvé que cet objectif peut être atteint avec un polyester thermoplastique amorphe comprenant au moins un motif 1,4 : 3,6-dianhydrohexitol, au moins un motif d'un diol alicyclique autre que les motifs 1,4 : 3,6-dianhydrohexitol et au moins un motif diacide carboxylique aromatique, tout en étant exempts de motifs éthylène glycol alors qu'il était connu jusqu'à présent que ce dernier était indispensable pour l'incorporation dudit l'isosorbide dans le polyester.

### Résumé de l'invention

L'invention a ainsi pour objet l'utilisation d'un polyester thermoplastique amorphe pour la fabrication d'articles optiques, ledit polyester thermoplastique amorphe comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
le ratio molaire (A)/[(A)+(B)] étant d'au moins 0,32 et d'au plus 0,90 et la viscosité réduite en solution supérieure à 50 mL/g.
ledit polyester étant exempt de motifs diol aliphatique non cyclique ou comprenant une quantité molaire de motifs diol aliphatique non cyclique, par rapport à la totalité des motifs monomériques du polyester, inférieure à 5%, et dont la viscosité réduite en solution (25°C ; phénol (50%m) : ortho-dichlorobenzène (50%m) ; 5 g/L de polyester) est supérieure à 50 mL/g ledit polyester présente une température de transition vitreuse d'au moins 116°C et d'au plus 200 °C.

Un second objet de l'invention concerne un procédé de fabrication d'articles optiques à base du polyester thermoplastique amorphe décrit ci-dessus.

Enfin, un troisième objet de l'invention concerne un article optique comprenant le polyester thermoplastique amorphe décrit ci-dessus.

Les polyesters thermoplastiques amorphes mis en œuvre dans la présente invention possèdent une température de transition vitreuse d'au moins 116 °C, une viscosité réduite en solution élevée, une faible biréfringence et possèdent d'excellentes propriétés de résistance au choc et aux rayures, ce qui est particulièrement intéressant pour une utilisation dans la fabrication d'articles optiques.

### Description détaillée de l'invention

Un premier objet de l'invention concerne l'utilisation d'un polyester thermoplastique amorphe pour la fabrication d'articles optiques, ledit polyester thermoplastique amorphe comprenant :
- au moins un motif 1,4 : 3,6-dianhydrohexitol (A) ;
- au moins un motif diol alicyclique (B) autre que les motifs 1,4 : 3,6-dianhydrohexitol (A) ;
- au moins un motif acide téréphtalique (C) ;
le ratio molaire (A)/[(A)+(B)] étant d'au moins 0,32 et d'au plus 0,90 et la viscosité réduite en solution supérieure à 50 mL/g.

Par ratio molaire (A)/[(A)+(B)], on entend le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A).

Le polyester thermoplastique amorphe est exempt de motifs diol aliphatiques non cycliques ou en comprend une faible quantité.

Par « faible quantité molaire de motifs diol aliphatique non cyclique », on entend notamment une quantité molaire de motifs diol aliphatique non cyclique inférieure à 5%. Selon l'invention, cette quantité molaire représente le rapport de la somme des motifs diol aliphatique non cyclique, ces motifs pouvant être identiques ou différents, par rapport à la totalité des motifs monomériques du polyester.

Un diol aliphatique non cyclique peut être un diol aliphatique non cyclique linéaire ou ramifié. Il peut également être un diol aliphatique non cyclique saturé ou insaturé. Outre l'éthylène glycol, le diol aliphatique non cyclique linéaire saturé peut par exemple être le 1,3-propanediol, le 1,4-butanediol, le 1,5-pentanediol, le 1,6-hexanediol, le 1,8-octanediol et/ou le 1,10-decanediol. Comme exemple de diol aliphatique non cyclique ramifié saturé, on peut citer le 2-methyl-1,3-propanediol, le 2,2,4-trimethyl-1,3-pentanediol, le 2-ethyl-2-butyl-1,3-propanediol, le propylèneglycol et/ou le néopentylglycol. Comme exemple de diol aliphatique insaturé, on peut citer par exemple le cis-2-butene-1,4-diol.

Cette quantité molaire de motif diol aliphatique non cyclique est avantageusement inférieure à 1%. De préférence, le polyester est exempt de motif diol aliphatique non cyclique et plus préférentiellement, il est exempt d'éthylène glycol.

Malgré la faible quantité de diol aliphatique non cyclique, et donc d'éthylène glycol, utilisé pour la synthèse, il est obtenu de manière surprenante un polyester thermoplastique amorphe présentant une viscosité réduite en solution élevée et dans lequel l'isosorbide est particulièrement bien incorporé. Sans être lié par une quelconque théorie, ceci s'expliquerait par le fait que la cinétique de réaction de l'éthylène glycol est beaucoup plus élevée que celle du 1,4 : 3,6-dianhydrohexitol, ce qui limite fortement l'intégration de ce dernier dans le polyester. Les polyesters en résultant présentent donc un faible taux d'intégration de 1,4 : 3,6-dianhydrohexitol et par conséquent une température de transition vitreuse relativement basse.

Le monomère (A) est un 1,4 : 3,6-dianhydrohexitol peut être l'isosorbide, l'isomannide, l'isoidide, ou un de leurs mélanges. De préférence, le 1,4 : 3,6-dianhydrohexitol (A) est l'isosorbide.

L'isosorbide, l'isomannide et l'isoidide peuvent être obtenus respectivement par déshydratation de sorbitol, de mannitol et d'iditol. En ce qui concerne l'isosorbide, il est commercialisé par la Demanderesse sous le nom de marque POLYSORB® P.

Le diol alicyclique (B) est également appelé diol aliphatique et cyclique. Il s'agit d'un diol qui peut notamment être choisi parmi le 1,4-cyclohexanedimethanol, le 1,2-cyclohexanedimethanol, le 1,3-cyclohexanedimethanol ou un mélange de ces diols. Très préférentiellement, le diol alicyclique (B) est le 1,4-cyclohexanedimethanol. Le diol alicyclique (B) peut être dans la configuration *cis,* dans la configuration *trans* ou peut être un mélange de diols en configuration *cis* et *trans.*

Le ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) étant d'au moins 0,32 et d'au plus 0,90. Avantageusement, ce ratio est d'au moins 0,35 et d'au plus 0,70, et tout particulièrement ce ratio est d'au moins 0,40 et d'au plus 0,65.

Les polyesters thermoplastiques amorphes particulièrement adaptés pour la fabrication d'articles optiques peuvent par exemple comprendre :
- une quantité molaire de motifs 1,4 : 3,6-dianhydrohexitol (A) allant de 16 à 54% ;
- une quantité molaire de motifs diol alicyclique (B) autre que les motifs 1,4 : 3,6-dianhydrohexitol (A) allant de 5 à 30% ;
- une quantité molaire de motifs acide téréphtalique (C) allant de 45 à 55%.

Les quantités en différents motifs dans le polyester peuvent être déterminées par RMN 1H ou par analyse chromatographique du mélange de monomères issus d'une méthanolyse ou d'une hydrolyse complète du polyester, de préférence par RMN 1H.

L'homme de l'art peut aisément trouver les conditions d'analyse pour déterminer les quantités en chacun des motifs du polyester. Par exemple, à partir d'un spectre RMN d'un poly(1,4-cyclohexanedimethylène-co-isosorbide téréphtalate), les déplacements chimiques relatifs au 1,4-cyclohexanedimethanol sont compris entre 0,9 et 2,4 ppm et 4,0 et 4,5 ppm, les déplacements chimiques relatifs au cycle téréphtalate sont compris entre 7,8 et 8,4 ppm et les déplacements chimiques relatifs à l'isosorbide sont compris entre 4,1 et 5,8 ppm. L'intégration de chaque signal permet de déterminer la quantité de chaque motif du polyester.

Les polyesters thermoplastiques amorphes ainsi préparés présentent une température de transition vitreuse d'au moins 116°C et d'au plus 200°C. Préférentiellement, la température de transition vitreuse est d'au moins 118°C, très préférentiellement d'au moins 120°C, et encore plus préférentiellement, d'au moins 122°C et d'au plus 190°C. La température de transition vitreuse est mesurée par les méthodes classiques, notamment en utilisant la calorimétrie différentielle à balayage (DSC) en utilisant une vitesse de chauffe de 10°C/min. Le protocole expérimental est détaillé dans la partie exemples ci-après.

Ils présentent aussi notamment une clarté L* supérieure à 40. Avantageusement, la clarté L* est supérieure à 55, de préférence supérieure à 60, tout préférentiellement supérieure à 65, par exemple supérieure à 70. Le paramètre L* peut être déterminé à l'aide d'un spectrophotomètre, en utilisant le modèle CIE Lab.

Enfin, la viscosité réduite en solution supérieure à 50 mL/g et inférieure à 150 mL/g, cette viscosité pouvant être mesurée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

Ce test de mesure de viscosité réduite en solution est, de par le choix des solvants et de la concentration des polymères utilisés, parfaitement adapté pour déterminer la viscosité du polymère visqueux préparé selon le procédé décrit.

Le caractère amorphe des polyesters thermoplastiques utilisés selon la présente invention se caractérise, par l'absence de raies de diffraction aux rayons X ainsi que par l'absence d'un pic de fusion endothermique en Analyse Calorimétrique Différentielle à Balayage.

Les polyesters thermoplastiques amorphes préparés selon le procédé précédemment décrit, possèdent d'excellentes propriétés pour la fabrication d'articles optiques.

En effet, grâce notamment au ratio molaire (A)/[(A)+(B)] d'au moins 0,32 et d'au plus 0,90, et à une viscosité réduite en solution supérieure à 50 mL/g et de préférence inférieure à 150 mL/g, les polyesters thermoplastiques amorphes ont une meilleure tenue thermique lorsqu'ils sont injectés et permettent d'obtenir des propriétés optiques, telles que la transparence ou la biréfringence, qui s'en trouvent améliorées. De plus, ils présentent une bonne résistance à la rayure et ils sont métallisables.

Les articles optiques au sens de la présente invention sont par exemple des CD (acronyme de l'anglais *compact disc*), des DVD (acronyme de l'anglais *digital versatil disc*), des lentilles optiques, des lentilles de Fresnel, des fenêtres de tableau de bord, des réflecteurs prismatiques, des feuilles ou des films transparents, des films pour écrans LCD, des composants de diodes électroluminescentes, ou encore des fibres optiques.

L'utilisation selon l'invention, la fabrication d'articles optiques à partir de polyesters thermoplastiques amorphes décrits ci-dessus peut nécessiter une étape de mise en forme par une ou plusieurs techniques couramment utilisées pour les matières plastiques, incluant par exemple le moulage par injection, le moulage par compression, l'injection compression, l'extrusion au travers d'une filière, lesdites techniques pouvant être mises en œuvre pour concevoir notamment des fibres, des films, des feuilles, des tiges, des plaques, des granulés ou des joncs.

Avantageusement, la fabrication d'articles optiques à partir de polyester thermoplastiques amorphes selon l'invention peut être réalisée par injection ou injection-compression. D'une manière préférentielle, la fabrication est réalisée par injection.

Selon un mode de réalisation, le polyester thermoplastique amorphe peut être conditionné après polymérisation sous une forme facilement manipulable telle que des pellets ou des granulés avant d'être utilisé pour la fabrication d'articles optiques. D'une manière préférentielle, le polyester thermoplastique amorphe est conditionné sous forme de granulés, lesdits granulés étant avantageusement séchés avant la transformation sous forme d'articles optiques. Le séchage est réalisé de manière à obtenir des granulés présentant un taux d'humidité résiduelle inférieur à 300 ppm, comme par exemple environ 230 ppm.

Selon un mode de réalisation particulier et indépendamment de la méthode utilisée pour la fabrication de l'article optique, le polyester thermoplastique amorphe précédemment défini peut être utilisé en combinaison avec un ou plusieurs polymères additionnels.

Le polymère additionnel peut être choisi parmi les polyamides, les polyesters autres que le polyester selon l'invention, le polystyrène, les copolymères de styrène, les copolymères styrène-acrylonitrile, les copolymères styrène-acrylonitrile-butadiène, les polyméthacrylates de méthyle, les copolymères acryliques, les poly(éther-imides), les polyoxyde de phénylène tels que le polyoxyde de (2,6-diméthylphenylène), les polysulfate de phénylène, les poly (ester-carbonates), les polycarbonates, les polysulfones, les polysulfone ethers, les polyéther cétone et les mélanges de ces polymères.

Le polymère additionnel peut également être un polymère permettant d'améliorer les propriétés au choc du polymère, notamment les polyoléfines fonctionnelles telles que les polymères et copolymères d'éthylène ou de propylène fonctionnalisés, des copolymères cœur-écorce ou des copolymères à bloc.

Lors de la fabrication de l'article optique à partir du polyester thermoplastique amorphe, un ou plusieurs additifs peuvent également être ajoutés afin de conférer des propriétés particulières au produit fini.

Ainsi, l'additif peut par exemple être choisi parmi les agents démoulant, tels que l'Incromold™ de Croda, les agents de résistance aux UV comme par exemple des molécules type benzophénone ou benzotriazole, comme la gamme Tinuvin™ de BASF : tinuvin 326, tinuvin P ou le tinuvin 234 par exemple ou des amines encombrées comme la gamme Chimassorb™ de BASF : Chimassorb 2020, Chimasorb 81 ou Chimassorb 944 par exemple.

L'additif peut également être un agent ignifuge ou retardateur de flamme, comme par exemple des dérivés halogénés ou des retardateurs de flamme non halogénés (par exemple des dérivés phosphorés, tels que les Exolit® OP) ou comme la gamme des cyanurates mélaminés (par exemple les melapur™ : mélapur 200) ou encore des hydroxydes d'aluminium ou de magnésium.

Un second objet de l'invention concerne un procédé de fabrication d'un article optique, ledit procédé comprenant les étapes suivantes de :
- Fourniture d'un polyester thermoplastique amorphe tel que défini ci-dessus,
- Préparation dudit article optique à partir du polyester thermoplastique amorphe obtenu à l'étape précédente.

L'étape de préparation peut être réalisée par les techniques connues de l'homme du métier comme par exemple l'injection ou injection-compression. D'une manière préférentielle, la préparation est réalisée par injection.

Un troisième objet de l'invention concerne des articles optiques comprenant le polyester thermoplastique amorphe décrit ci-dessus. Les articles optiques peuvent également comprendre un ou plusieurs polymères additionnels et/ou un ou plusieurs additifs tels que définis précédemment.

Les polyesters thermoplastiques amorphes décrits ci-dessus pour la fabrication d'articles optiques peuvent être préparés par un procédé de fabrication comprenant :
- une étape d'introduction dans un réacteur de monomères comprenant au moins un 1,4 : 3,6-dianhydrohexitol (A), au moins un diol alicyclique (B) autre que les 1,4 : 3,6-dianhydrohexitols (A) et au moins un acide téréphtalique (C), le ratio molaire ((A)+(B))/(C) allant de 1,05 à 1,5, lesdits monomères étant exempts de diol aliphatique non cyclique ou comprenant, par rapport à la totalité des monomères introduits, une quantité molaire de motifs diol aliphatique non cyclique inférieure à 5% ;
- une étape d'introduction dans le réacteur d'un système catalytique ;
- une étape de polymérisation desdits monomères pour former le polyester, ladite étape consistant en :
   ▪ un premier stade d'oligomérisation pendant lequel le milieu réactionnel est agité sous atmosphère inerte à une température allant de 265 à 280 °C, avantageusement de 270 à 280°C, par exemple 275°C ;
   ▪ un second stade de condensation des oligomères pendant lequel les oligomères formés sont agités sous vide à une température allant de 278 à 300°C afin de former le polyester, avantageusement de 280 à 290°C, par exemple 285 °C ;
- une étape de récupération du polyester thermoplastique amorphe,
dans lequel le ration molaire ((A)+(B))/(C) va de 1,05 à 1,50.

Le polymère obtenu présente ainsi une viscosité réduite en solution supérieure à 50 mL/g. Ce premier stade du procédé se fait en atmosphère inerte, c'est-à-dire sous atmosphère d'au moins un gaz inerte. Ce gaz inerte peut notamment être du diazote. Ce premier stade peut se faire sous flux de gaz et il peut également se faire sous pression, par exemple à une pression comprise entre 1,05 et 8 bars.

De préférence, la pression va de 3 à 8 bars, tout préférentiellement de 5 à 7,5 bars, par exemple 6,6 bars. Dans ces conditions de pression préférées, on favorise la réaction de l'ensemble des monomères entre eux en limitant la perte de monomères lors de ce stade.

Préalablement au premier stade d'oligomérisation, une étape de désoxygénation des monomères est préférentiellement réalisée. Elle peut se faire par exemple, après avoir introduit les monomères dans le réacteur, en réalisant un vide puis en y introduisant un gaz inerte tel que l'azote. Ce cycle vide-introduction de gaz inerte peut être répété à plusieurs reprises, par exemple de 3 à 5 fois. De préférence, ce cycle vide-azote est réalisé à une température entre 60 et 80 °C afin que les réactifs, et notamment les diols, soient totalement fondus. Cette étape de désoxygénation présente l'avantage d'améliorer les propriétés de coloration du polyester obtenu à la fin du procédé.

Le second stade de condensation des oligomères se fait sous vide. La pression peut diminuer au cours de ce second stade de manière continue en utilisant des rampes de baisse de pression, par paliers ou encore en utilisant une combinaison de rampes de baisse de pression et de paliers. De préférence, à la fin de ce second stade, la pression est inférieure à 10 mbar, tout préférentiellement inférieure à 1 mbar.

Le premier stade de l'étape de polymérisation a de préférence une durée allant de 20 minutes à 5 heures. Avantageusement, le second stade a une durée allant de 30 minutes à 6 heures, le début de ce stade consistant au moment où le réacteur est placé sous vide, c'est-à-dire à une pression inférieure à 1bar.

Le procédé comprend en outre une étape d'introduction dans le réacteur d'un système catalytique. Cette étape peut se dérouler préalablement ou pendant l'étape de polymérisation décrite précédemment.

On entend par système catalytique, un catalyseur ou un mélange de catalyseurs, éventuellement dispersé(s) ou fixé(s) sur un support inerte.

Le catalyseur est utilisé dans des quantités adaptées pour obtenir un polymère de haute viscosité conformément à l'utilisation selon l'invention.

On utilise avantageusement lors du stade d'oligomérisation un catalyseur d'estérification. Ce catalyseur d'estérification peut être choisi parmi les dérivés d'étain, de titane, de zirconium, d'hafnium, de zinc, de manganèse, de calcium, de strontium, des catalyseurs organiques comme l'acide para-toluène sulfonique (APTS), l'acide méthane sulfonique (AMS) ou un mélange de ces catalyseurs. A titre d'exemple de tels composés, on peut citer ceux donnés dans la demande US2011282020A1 aux paragraphes [0026] à [0029], et à la page 5 de la demande WO 2013/062408 A1.

De préférence, on utilise lors du premier stade de transestérification un dérivé de zinc, ou un dérivé de manganèse d'étain ou de germanium.

A titre d'exemple de quantités massiques, on peut utiliser de 10 à 500 ppm de métal contenu dans le système catalytique lors du stade d'oligomérisation, par rapport à la quantité de monomères introduits.

En fin de transestérification, le catalyseur de la première étape peut être optionnellement bloqué par l'ajout d'acide phosphoreux ou d'acide phosphorique, ou alors comme dans le cas de l'étain (IV) réduit par des phosphites tels que le phosphite de triphenyle ou les phosphite des tris(nonylephenyle) ou ceux cités au paragraphe [0034] de la demande US 2011/282020A1.

Le second stade de condensation des oligomères peut optionnellement être réalisé avec l'ajout d'un catalyseur. Ce catalyseur est avantageusement choisi parmi les dérivés d'étain, préférentiellement d'étain, de titane, de zirconium, de germanium, d'antimoine, de bismuth, d'hafnium, de magnésium, de cérium, de zinc, de cobalt, de fer, de manganèse, de calcium, de strontium, de sodium, de potassium, d'aluminium, de lithium ou d'un mélange de ces catalyseurs. Des exemples de tels composés peuvent être par exemple ceux donnés dans le brevet EP 1 882 712 B1 aux paragraphes [0090] à [0094].

De préférence, le catalyseur est un dérivé d'étain, de titane, de germanium, d'aluminium ou d'antimoine.

A titre d'exemple de quantités massiques, on peut utiliser de 10 à 500 ppm de métal contenu dans le système catalytique lors du stade de condensation des oligomères, par rapport à la quantité de monomères introduits.

Tout préférentiellement, on utilise un système catalytique lors du premier stade et du second stade de polymérisation. Ledit système est avantageusement constitué d'un catalyseur à base d'étain ou d'un mélange de catalyseurs à base d'étain, de titane, de germanium et d'aluminium.

A titre d'exemple, on peut utiliser une quantité massique de 10 à 500 ppm de métal contenu dans le système catalytique, par rapport à la quantité de monomères introduits.

Selon le procédé de préparation, on utilise avantageusement un anti-oxydant lors de l'étape de polymérisation des monomères. Ces anti-oxydants permettent de réduire la coloration du polyester obtenu. Les anti-oxydants peuvent être des anti-oxydants primaires et/ou secondaires. L'anti-oxydant primaire peut être un phénol encombré stériquement tels que les composés Hostanox® 0 3, Hostanox® 0 10, Hostanox® 0 16, Ultranox® 210, Ultranox®276, Dovernox® 10, Dovernox® 76, Dovernox® 3114, Irganox® 1010, Irganox® 1076 ou un phosphonate tel que l'Irgamod® 195. L'anti-oxydant secondaire peut être des composés phosphorés trivalents tels que Ultranox® 626, Doverphos® S-9228, Hostanox® P-EPQ, ou l'Irgafos 168.

Il est également possible d'introduire, comme additif de polymérisation dans le réacteur, au moins un composé susceptible de limiter les réactions parasites d'éthérification tel que l'acétate de sodium, le tétraméthylammonium hydroxyde ou le tétraéthylammonium hydroxyde.

Le procédé comprend en outre une étape de récupération du polyester thermoplastique amorphe à l'issue de l'étape de polymérisation. Le polyester peut être récupéré par extraction sous forme d'un jonc de polymère fondu. Ce jonc peut être transformé en granulés en utilisant les techniques classiques de granulation.

L'invention sera mieux comprise à l'aide des exemples et des figures qui suivent qui se veulent purement illustratifs et ne limitent en rien la portée de la protection.

### Figures

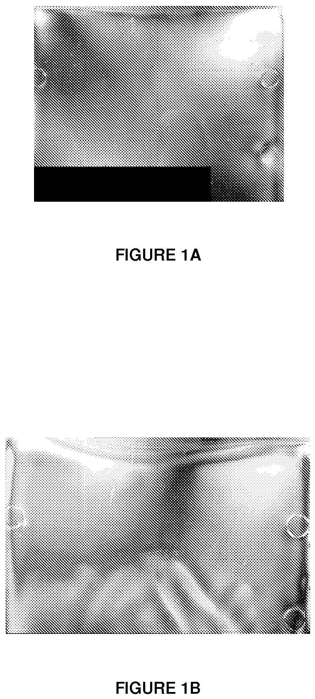

Figure 1A: Photo d'une plaque fabriquée avec un polyester thermoplastique amorphe selon l'invention.
Figure 1B: Photo d'une plaque non fabriquée avec un polyester thermoplastique amorphe selon l'invention.

### Exemple

Les propriétés des polymères ont été étudiées avec les techniques suivantes :

### Viscosité réduite en solution

La viscosité réduite en solution est évaluée à l'aide d'un viscosimètre capillaire Ubbelohde à 25°C dans un mélange équimassique de phénol et d'ortho-dichlorobenzène après dissolution du polymère à 130°C sous agitation, la concentration de polymère introduit étant de 5g/L.

### DSC

Les propriétés thermiques des polyesters ont été mesurées par calorimétrie différentielle à balayage (DSC) : l'échantillon est tout d'abord chauffé sous atmosphère d'azote dans un creuset ouvert de 10 à 320°C (10°C.min-1), refroidi à 10°C (10°C.min-1) puis réchauffé à 320°C dans les mêmes conditions que la première étape. Les températures de transition vitreuse ont été prises au point médian (en anglais mid-point) du second chauffage. Les températures de fusion éventuelles sont déterminées sur le pic endothermique (début du pic (en anglais, onset)) au premier chauffage. De même la détermination de l'enthalpie de fusion (aire sous la courbe) est réalisée au premier chauffage.

Pour les exemples illustratifs présentés ci-dessous les réactifs suivants ont été utilisés : 1,4-Cyclohexane dimethanol (pureté 99%, mélange d'isomères cis et trans)
Isosorbide (pureté >99,5%) Polysorb® P de Roquette Frères
Acide téréphtalique (pureté 99+%) de Acros
Irganox® 1010 de BASF AG
Dibutylétain oxyde (pureté 98%) de Sigma Aldrich

### Préparation et mise en forme d'un polyester thermoplastique amorphe

### A : Polymérisation

Deux polyesters thermoplastiques **P1** et **P2** ont été préparés selon le mode opératoire décrit ci-après avec les quantités de réactifs détaillées au tableau 1. **P1** est un polyester thermoplastique amorphe préparé pour une utilisation selon l'invention avec notamment un ratio molaire motifs 1,4 : 3,6-dianhydrohexitol (A) / somme des motifs 1,4 : 3,6-dianhydrohexitol (A) et des motifs diols alicycliques (B) autre que les motifs 1,4 : 3,6-dianhydrohexitol (A) d'au moins 0,32 alors que **P2** est un polyester servant de comparatif avec un ratio molaire (A)/[(A)+(B)] de 0,1.

Dans un réacteur de 7,5L sont ajoutés 859 g (6 mol) de 1,4-cyclohexanedimethanol, 871 g (6 mol) d'isosorbide, 1800 g (10.8 mol) d'acide téréphtalique, 1,5 g d'Irganox 1010 (anti-oxydant) et 1,23 g de dibutylétainoxyde (catalyseur).
Pour extraire l'oxygène résiduel des cristaux d'isosorbide, 4 cycles vide-azote sont effectués une fois la température du milieu réactionnel comprise entre 60 et 80°C. Le mélange réactionnel est ensuite chauffé à 275°C (4°C/min) sous 6,6 bars de pression et sous agitation constante (150 tr/min). Le taux d'estérification est estimé à partir de la quantité de distillat collectée. Puis, la pression est réduite à 0,7 mbar en 90 minutes selon une rampe logarithmique et la température amenée à 285°C. Ces conditions de vide et de température ont été maintenues jusqu'à obtenir une augmentation de couple de 10Nm par rapport au couple initial.
Enfin, un jonc de polymère est coulé par la vanne de fond du réacteur, refroidi dans un bac d'eau thermo-régulé à 15°C et découpé sous forme de granulés d'environ 15 mg.

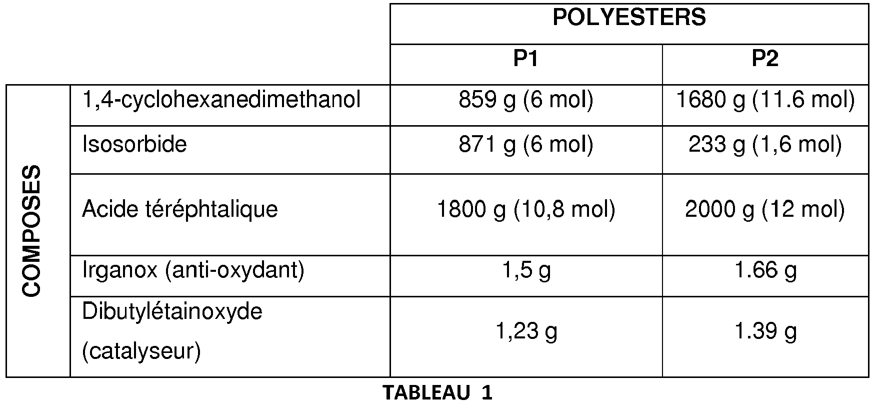

Les propriétés des résines obtenues pour les polyesters **P1** et **P2** sont résumées dans le tableau 2 ci-dessous :

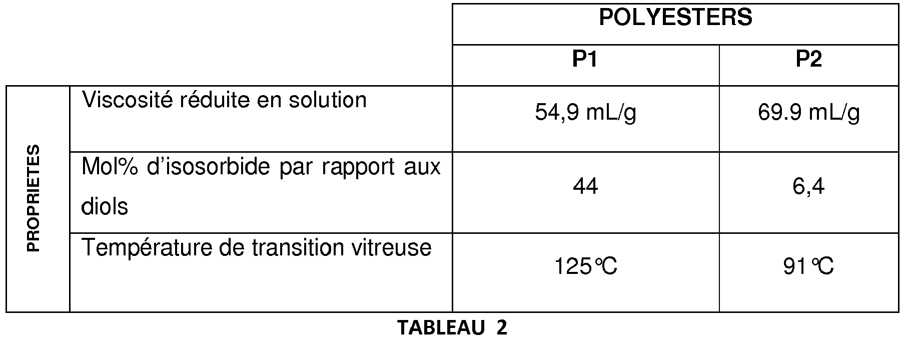

En ce qui concerne les propriétés thermiques, les relevés ont été effectués au second chauffage.

### B : Injection

Les granulés des polyesters **P1** et **P2** sont séchés sous vide à 110°C afin d'atteindre des taux d'humidité résiduelle inférieurs à 300 ppm et notamment dans cet exemple, la teneur en eau des granulés est de 230 ppm.

L'injection s'effectue sur une presse Engel VICTORY 80®.

Les granulés, maintenus en atmosphère sèche, sont introduits dans la trémie de la presse à injecter. Les granulés sont injectés sous forme de plaque de 2 mm d'épaisseur et les paramètres d'injection sont résumés dans le tableau 3 ci-dessous :

**TABLEAU 3**

| **Dénomination** | **Unités** | **P1** | **P2** |
|---|---|---|---|
| Température du plastique à l'état fondu (buse/fourreau) | °C | 270/265/265/260 | 290/285/280/275 |
| Température du moule | °C | 50 | 50 |
| Vitesse d'injection | mm/s | 80 | 80 |
| Pression de maintien | bar | 23 | 24 |
| Durée du maintien | s | 15 | 20 |
| Temps de refroidissement | s | 15 | 20 |

Les plaques obtenues avec ces paramètres présentent des propriétés bien différentes comme le montrent les Figures 1A et 1B qui représentent les photos des deux plaques obtenues avec les polyesters thermoplastiques **P1** et **P2** respectivement.

Le polyester thermoplastique amorphe **P1** permet d'obtenir des plaques présentant des propriétés optiques intéressantes et notamment une faible biréfringence. Au contraire, le polyester P2, ne contenant pas un ratio molaire (A)/[(A)+(B)] d'au moins 0,32, présente une biréfringence trop importante incompatible avec une utilisation pour la fabrication d'articles optiques.

## Revendications

1. Utilisation d'un polyester thermoplastique amorphe pour la fabrication d'articles optiques, ledit polyester thermoplastique amorphe comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ; le ratio molaire (A)/[(A)+(B)] étant d'au moins 0,32 et d'au plus 0,90 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g
ledit polyester présente une température de transition vitreuse d'au moins 116°C et d'au plus 200 °C.

2. Utilisation selon la revendication 1, **caractérisée en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

3. Utilisation selon l'une des revendications 1 ou 2, **caractérisée en ce que** le 1,4 : 3,6-dianhydrohexitol (A) est l'isosorbide.

4. Utilisation selon l'une quelconque des revendications 1 à 3, **caractérisée en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

5. Utilisation selon l'une quelconque des revendications 1 à 4, **caractérisée en ce que** l'article optique comprend un ou plusieurs polymères additionnels et/ou un ou plusieurs additifs.

6. Utilisation selon l'une quelconque des revendications 1 à 5, **caractérisée en ce que** les articles optiques sont choisis dans le groupe comprenant les CD (acronyme de l'anglais *compact disc*), les DVD (acronyme de l'anglais *digital versatil disc*), les lentilles, les lentilles de Fresnel, les fenêtres de tableau de bord, les réflecteurs prismatiques, les feuilles ou les films transparents, les films pour écrans LCD, les composants de diodes électroluminescentes ou encore les fibres optiques.

7. Article optique comprenant un polyester thermoplastique amorphe comprenant :
• au moins un motif 1,4 : 3,6-dianhydrohexitol (A) ;
• au moins un motif diol alicyclique (B) autre que les motifs 1,4 : 3,6-dianhydrohexitol (A) ;
• au moins un motif acide téréphtalique (C) ;
le ratio molaire (A)/[(A)+(B)] étant d'au moins 0,32 et d'au plus 0,90 ;
ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g
ledit polyester présente une température de transition vitreuse d'au moins 116°C et d'au plus 200 °C.

8. Article optique selon la revendication 7, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

9. Article optique selon l'une des revendications 7 ou 8, **caractérisé en ce que** le 1,4 : 3,6-dianhydrohexitol (A) est l'isosorbide.

10. Article optique selon l'une des revendications 7 à 9, **caractérisé en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

11. Article optique selon l'une des revendications 7 à 10, **caractérisé en ce que** l'article optique comprend un ou plusieurs polymères additionnels et/ou un ou plusieurs additifs.

12. Article optique selon l'une des revendication 7 à 11, **caractérisé en ce que** les articles optiques sont choisis dans le groupe comprenant les CD (acronyme de l'anglais *compact disc*), les DVD (acronyme de l'anglais *digital versatil disc*), les lentilles, les lentilles de Fresnel, les fenêtres de tableau de bord, les réflecteurs prismatiques, les feuilles ou les films transparents, les films pour écrans LCD, les composants de diodes électroluminescentes ou encore les fibres optiques.

13. Procédé de fabrication d'un article optique comprenant les étapes suivantes de :
- Fourniture d'un polyester thermoplastique amorphe comprenant au moins un motif 1,4 : 3,6-dianhydrohexitol (A), au moins un motif diol alicyclique (B) autre que les motifs 1,4 : 3,6-dianhydrohexitol (A), au moins un motif acide téréphtalique (C), dans lequel le ratio molaire (A)/[(A)+(B)] étant d'au moins 0,32 et d'au plus 0,90, ledit polyester étant exempt de motifs diol aliphatique non cyclique ou comprenant une quantité molaire de motifs diol aliphatique non cyclique, par rapport à la totalité des motifs monomériques du polyester, inférieure à 1%, et dont la viscosité réduite en solution (25°C ; phénol (50%m) : ortho-dichlorobenzène (50%m) ; 5 g/L de polyester) est supérieure à 50 mL/g ledit polyester présente une température de transition vitreuse d'au moins 116°C et d'au plus 200 °C
- Préparation dudit article optique à partir du polyester thermoplastique amorphe obtenu à l'étape précédente.

14. Procédé de fabrication selon la revendication 13, **caractérisé en ce que** l'étape de préparation est réalisée par injection.

15. Procédé selon l'une des revendications 13 ou 14, **caractérisé en ce que** le diol alicyclique (B) est un diol choisi parmi le 1,4-cyclohexanedimethanol, le 1,2-cyclohexanedimethanol, le 1,3-cyclohexanedimethanol ou un mélange de ces diols, très préférentiellement le 1,4-cyclohexanedimethanol.

16. Procédé selon l'une des revendications 13 à 15, **caractérisé en ce que** le 1,4 : 3,6-dianhydrohexitol (A) est l'isosorbide.

17. Procédé selon l'une des revendications 13 à 16 **caractérisé en ce que** le ratio molaire (motif 3,6-dianhydrohexitol (A) + motif diol alicyclique (B) autre que les motifs 1,4 : 3,6-dianhydrohexitol (A))/(motif acide téréphtalique (C)) est de 1,05 à 1,5.

18. Procédé selon l'une des revendications 13 à 17, **caractérisé en ce que** l'article optique comprend un ou plusieurs polymères additionnels et/ou un ou plusieurs additifs.

19. Procédé selon l'une des revendication 13 à 18, **caractérisé en ce que** les articles optiques sont choisis dans le groupe comprenant les CD (acronyme de l'anglais *compact disc*), les DVD (acronyme de l'anglais *digital versatil disc*), les lentilles, les lentilles de Fresnel, les fenêtres de tableau de bord, les réflecteurs prismatiques, les feuilles ou les films transparents, les films pour écrans LCD, les composants de diodes électroluminescentes ou encore les fibres optiques.

## Patentansprüche

1. Verwendung eines amorphen thermoplastischen Polyesters für die Herstellung von optischen Artikeln, wobei der amorphe thermoplastische Polyester umfasst:
• wenigstens eine 1,4:3,6-Dianhydrohexitol-Einheit (A),
• wenigstens eine von den 1,4:3,6-Dianhydrohexitol-Einheiten (A) verschiedene alicyclische Diol-Einheit (B),
• wenigstens eine Terephthalsäure-Einheit (C); wobei das molare Verhältnis (A)/[(A)+(B)] wenigstens 0,32 und höchstens 0,90 beträgt,
wobei der Polyester frei von nicht-cyclischen aliphatischen Diol-Einheiten ist oder bezogen auf die gesamten Monomer-Einheiten des Polyesters eine molare Menge an nicht-cyclischen aliphatischen Diol-Einheiten von weniger als 1 % aufweist und wobei dessen reduzierte Viskosität in Lösung (25°C; Phenol (50%m):ortho-Dichlorbenzol (50%m); 5 g/l Polyester) größer als 50 ml/g ist,
wobei der Polyester eine Glasübergangstemperatur von wenigstens 116°C und höchstens 200°C aufweist.

2. Verwendung nach Anspruch 1, **dadurch gekennzeichnet, dass** das alicyclische Diol (B) ein Diol ist, gewählt aus 1,4-Cyclohexandimethanol, 1,2-Cyclohexandimethanol, 1,3-Cyclohexandimethanol oder einer Mischung dieser Diole, stark bevorzugt 1,4-Cyclohexandimethanol.

3. Verwendung nach einem der Ansprüche 1 oder 2, **dadurch gekennzeichnet, dass** das 1,4:3,6-Dianhydrohexitol (A) Isosorbid ist.

4. Verwendung nach einem der Ansprüche 1 bis 3, **dadurch gekennzeichnet, dass** das Molverhältnis (3,6-Dianhydrohexitol-Einheit (A) + von den 1,4:3,6-Dianhydrohexitol-Einheiten (A) verschiedene alicyclische Diol-Einheit (B))/(Terephthalsäure-Einheit (C)) 1,05 bis 1,5 beträgt.

5. Verwendung nach einem der Ansprüche 1 bis 4, **dadurch gekennzeichnet, dass** der optische Artikel ein oder mehrere zusätzliche Polymere und/oder einen oder mehrere Zusätze umfasst.

6. Verwendung nach einem der Ansprüche 1 bis 5, **dadurch gekennzeichnet, dass** die optischen Artikel gewählt sind aus der Gruppe, umfassend CDs (Compact Discs), DVDs (Digital Versatile Discs), Linsen, Fresnel-Linsen, Armaturenbrettscheiben, prismatische Reflektoren, transparente Platten oder Folien, Folien für LCD-Displays, Leuchtdiodenkomponenten oder optische Fasern.

7. Optischer Artikel, umfassend einen amorphen thermoplastischen Polyester, umfassend:
• wenigstens eine 1,4:3,6-Dianhydrohexitol-Einheit (A),
• wenigstens eine von den 1,4:3,6-Dianhydrohexitol-Einheiten (A) verschiedene alicyclische Diol-Einheit (B),
• wenigstens eine Terephthalsäure-Einheit (C),
wobei das Molverhältnis (A)/[(A)+(B)] wenigstens 0,32 und höchstens 0,90 beträgt,
wobei der Polyester frei von nicht-zyklischen aliphatischen Diol-Einheiten ist oder eine molare Menge an nicht-zyklischen aliphatischen Diol-Einheiten von weniger als 1 % bezogen auf die gesamten Monomer-Einheiten des Polyesters aufweist und dessen reduzierte Viskosität in Lösung (25°C; Phenol (50%m):ortho-Dichlorbenzol (50%m); 5 g/l Polyester) größer als 50 ml/g ist,
wobei der Polyester eine Glasübergangstemperatur von wenigstens 116°C und höchstens 200°C aufweist.

8. Optischer Artikel nach Anspruch 7, **dadurch gekennzeichnet, dass** das alicyclische Diol (B) ein Diol ist, gewählt aus 1,4-Cyclohexandimethanol, 1,2-Cyclohexandimethanol, 1,3-Cyclohexandimethanol oder einer Mischung dieser Diole, stark bevorzugt 1,4-Cyclohexandimethanol.

9. Optischer Artikel nach einem der Ansprüche 7 oder 8, **dadurch gekennzeichnet, dass** das 1,4:3,6-Dianhydrohexitol (A) Isosorbid ist.

10. Optischer Artikel nach einem der Ansprüche 7 bis 9, **dadurch gekennzeichnet, dass** das Molverhältnis (3,6-Dianhydrohexitol-Einheit (A) + von den 1,4:3,6-Dianhydrohexitol-Einheiten (A) verschiedene alicyclische Diol-Einheit (B))/(Terephthalsäure-Einheit (C)) 1,05 bis 1,5 beträgt.

11. Optischer Artikel nach einem der Ansprüche 7 bis 10, **dadurch gekennzeichnet, dass** der optische Artikel ein oder mehrere zusätzliche Polymere und/oder einen oder mehrere Zusätze enthält.

12. Optischer Artikel nach einem der Ansprüche 7 bis 11, **dadurch gekennzeichnet, dass** die optischen Artikel gewählt sind aus der Gruppe, umfassend CDs (Compact Discs), DVDs (Digital Versatile Discs), Linsen, Fresnel-Linsen, Armaturenbrettscheiben, prismatische Reflektoren, transparente Platten oder Folien, Folien für LCD-Displays, Leuchtdiodenkomponenten oder optische Fasern.

13. Verfahren zur Herstellung eines optischen Artikels, welches die folgenden Schritte umfasst:
- Bereitstellen eines amorphen thermoplastischen Polyesters, der wenigstens eine 1,4:3,6-Dianhydrohexitol-Einheit (A), wenigstens eine von den 1,4:3,6-Dianhydrohexitol-Einheiten (A) verschiedene alicyclische Diol-Einheit (B) und wenigstens eine Terephthalsäure-Einheit (C) umfasst, wobei das Molverhältnis (A)/[(A)+(B)] wenigstens 0,32 und höchstens 0,90 beträgt, wobei der Polyester frei von nicht-cyclischen aliphatischen Diol-Einheiten ist oder bezogen auf die gesamten Monomereinheiten des Polyesters eine molare Menge an nicht-cyclischen aliphatischen Diol-Einheiten von weniger als 1 % aufweist und dessen reduzierte Viskosität in Lösung (25°C ; Phenol (50%m):ortho-Dichlorbenzol (50%m); 5 g/l Polyester) größer als 50 ml/g ist, wobei der Polyester eine Glasübergangstemperatur von wenigstens 116°C und höchstens 200°C aufweist,
- Fertigung des optischen Artikels aus dem im vorhergehenden Schritt erhaltenen amorphen thermoplastischen Polyester.

14. Herstellungsverfahren nach Anspruch 13, **dadurch gekennzeichnet, dass** der Fertigungsschritt durch Injektion durchgeführt wird.

15. Verfahren nach einem der Ansprüche 13 oder 14, **dadurch gekennzeichnet, dass** das alicyclische Diol (B) ein Diol ist, gewählt aus 1,4-Cyclohexandimethanol, 1,2-Cyclohexandimethanol, 1,3-Cyclohexandimethanol oder einer Mischung dieser Diole, stark bevorzugt 1,4-Cyclohexandimethanol.

16. Verfahren nach einem der Ansprüche 13 bis 15, **dadurch gekennzeichnet, dass** das 1,4:3,6-Dianhydrohexitol (A) Isosorbid ist.

17. Verfahren nach einem der Ansprüche 13 bis 16, **dadurch gekennzeichnet, dass** das Molverhältnis (3,6-Dianhydrohexitol-Einheit (A) + von den 1,4:3,6-Dianhydrohexitol-Einheiten (A) verschiedene alicyclische Diol-Einheit (B))/(Terephthalsäure-Einheit (C)) 1,05 bis 1,5 beträgt.

18. Verfahren nach einem der Ansprüche 13 bis 17, **dadurch gekennzeichnet, dass** der optische Artikel ein oder mehrere zusätzliche Polymere und/oder einen oder mehrere Zusätze enthält.

19. Verfahren nach einem der Ansprüche 13 bis 18, **dadurch gekennzeichnet, dass** die optischen Artikel gewählt sind aus der Gruppe, umfassend CDs (Compact Discs), DVDs (Digital Versatile Discs), Linsen, Fresnel-Linsen, Armaturenbrettscheiben, prismatische Reflektoren, transparente Platten oder Folien, Folien für LCD-Displays, Leuchtdiodenkomponenten oder optische Fasern.

## Claims

1. The use of an amorphous thermoplastic polyester for the production of optical articles, said amorphous thermoplastic polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
the (A)/[(A)+(B)] molar ratio being at least 0.32 and at most 0.90;
said polyester not containing any aliphatic non-cyclic diol units or comprising a molar amount of aliphatic non-cyclic diol units, relative to all the monomer units of the polyester, of less than 1%, and the reduced solution viscosity (25°C; phenol (50%m): orthodichlorobenzene (50%m); 5 g/l of polyester) of said polyester being greater than 50 ml/g said polyester having a glass transition temperature of at least 116°C and of most 200°C.

2. The use as claimed in claim 1, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

3. The use as claimed in either of claims 1 and 2, **characterized in that** the 1,4:3,6-dianhydrohexitol (A) is isosorbide.

4. The use as claimed in any one of claims 1 to 3, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

5. The use as claimed in any one of claims 1 to 54, **characterized in that** the optical article comprises one or more additional polymers and/or one or more additives.

6. The use as claimed in any one of claims 1 to 5, **characterized in that** the optical articles are chosen from the group comprising CDs (acronym of *compact discs*), DVDs (acronym of *digital versatile discs*), lenses, Fresnel lenses, dashboard windows, prism reflectors, transparent sheets or films, films for LCD screens, light-emitting diode components, or else optical fibers.

7. An optical article comprising an amorphous thermoplastic polyester comprising:
• at least one 1,4:3,6-dianhydrohexitol unit (A);
• at least one alicyclic diol unit (B) other than the 1,4:3,6-dianhydrohexitol units (A);
• at least one terephthalic acid unit (C);
the (A)/[(A)+(B)] molar ratio being at least 0.32 and at most 0.90;
said polyester not containing any aliphatic non-cyclic diol units or comprising a molar amount of aliphatic non-cyclic diol units, relative to all the monomer units of the polyester, of less than 1%, and the reduced solution viscosity (25°C; phenol (50%m): ortho-dichlorobenzene (50%m); 5 g/l of polyester) of said polyester being greater than 50 ml/g,
said polyester having a glass transition temperature of at least 116°C and of most 200°C.

8. The optical article as claimed in claim 7, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

9. The optical article as claimed in either of claims 7 and 8, **characterized in that** the 1,4:3,6-dianhydrohexitol (A) is isosorbide.

10. The optical article as claimed in one of claims 7 to 9, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

11. The optical article as claimed in one of claims 7 to 10, **characterized in that** the optical article comprises one or more additional polymers and/or one or more additives.

12. The optical article as claimed in one of claims 7 to 11, **characterized in that** the optical articles are chosen from the group comprising CDs (acronym of *compact discs*), DVDs (acronym of *digital versatile discs*), lenses, Fresnel lenses, dashboard windows, prism reflectors, transparent sheets or films, films for LCD screens, light-emitting diode components, or else optical fibers.

13. A process for producing an optical article, comprising the following steps of:
- provision of an amorphous thermoplastic polyester comprising at least one 1,4:3,6-dianhydrohexitol unit (A), at least one alicyclic diol unit (B) other than the 1,4:3,6-dianhydrohexitol units (A), at least one terephthalic acid unit (C), wherein the (A)/[(A)+(B)] molar ratio is at least 0.32 and at most 0.90, said polyester not containing any aliphatic non-cyclic diol units or comprising a molar amount of aliphatic non-cyclic diol units, relative to all the monomer units of the polyester, of less than 1%, and the reduced solution viscosity (25°C; phenol (50%m): ortho-dichlorobenzene (50%m); 5 g/l of polyester) of said polyester being greater than 50 ml/g and having a glass transition temperature of at least 116°C and of most 200°C
- preparation of said optical article from the amorphous thermoplastic polyester obtained in the preceding step.

14. The production process as claimed in claim 13, **characterized in that** the preparation step is carried out by injection molding.

15. The process as claimed in either of claims 13 and 14, **characterized in that** the alicyclic diol (B) is a diol chosen from 1,4-cyclohexanedimethanol, 1,2-cyclohexanedimethanol, 1,3-cyclohexanedimethanol or a mixture of these diols, very preferentially 1,4-cyclohexanedimethanol.

16. The process as claimed in one of claims 13 to 15, **characterized in that** the 1,4:3,6-dianhydrohexitol (A) is isosorbide.

17. The process as claimed in one of claims 13 to 16, **characterized in that** the (3,6-dianhydrohexitol unit (A) + alicyclic diol unit (B) other than the 1,4:3,6-dianhydrohexitol units (A))/(terephthalic acid unit (C)) molar ratio is from 1.05 to 1.5.

18. The process as claimed in one of claims 13 to 17, **characterized in that** the optical article comprises one or more additional polymers and/or one or more additives.

19. The process as claimed in one of claims 13 to 18, **characterized in that** the optical articles are chosen from the group comprising CDs (acronym of *compact discs*), DVDs (acronym of *digital versatile discs*), lenses, Fresnel lenses, dashboard windows, prism reflectors, transparent sheets or films, films for LCD screens, light-emitting diode components, or else optical fibers.
